# EUROPÄISCHE PATENTSCHRIFT

(11) **EP 2 669 124 B1**
(45) Veröffentlichungstag und Bekanntmachung des Hinweises auf die Patenterteilung: **06.03.2019**
(21) Anmeldenummer: 13169484.6
(22) Anmeldetag: 28.05.2013
(51) Int. Cl.: B60S 9/215, B62D 59/04, G05D 1/00

(54) **Anhänger-Rangiersystem mit Fernbedienung**
Trailer shunting system with remote control
Système de rangement de remorque avec télécommande

(30) Priorität: 29.05.2012 DE 102012010551
(43) Veröffentlichungstag der Anmeldung: 04.12.2013
(73) Patentinhaber: Truma Gerätetechnik GmbH & Co. KG, 85640 Putzbrunn (DE)
(72) Erfinder: Aemisegger, Steve, 81547 München (DE); Gumpp, Daniel, 86415 Mering (DE); Müller, Jochen, 85665 Moosach (DE); Schmid, Tobias, 85435 Erding (DE); Müßler, Klaus, 85235 Egenburg (DE); Fernandez, Ana Maria, 81739 München (DE); Müller, Jörg, 85658 Egmating (DE); Schaurer, Oliver, 85445 Oberding (DE); Möhring, Mario, 85408 Gammelsdorf (DE); Venschott, Mathias, 81825 München (DE)
(74) Vertreter: Prinz & Partner mbB

(56) Entgegenhaltungen:
- EP-A1- 1 488 836
- EP-A1- 1 894 822
- EP-A1- 2 360 543
- EP-A2- 1 004 230
- EP-A2- 1 826 107
- DE-A1- 10 346 888
- DE-U1-202009 005 524

## Beschreibung

Die Erfindung betrifft ein Rangiersystem für einen Anhänger, insbesondere für Wohnwagen, Bootsanhänger, Pferdeanhänger, Marktanhänger, Lastanhänger und ähnliche, gemäß dem Oberbegriff des Anspruchs 1.

Anhänger werden üblicherweise von Zugmaschinen gezogen. So ist es bekannt, dass ein Pkw einen Wohnwagen ziehen kann. Wenn der Anhänger von der Zugmaschine abgenommen ist, wird er üblicherweise von Hand in die endgültige Position geschoben. Jedoch werden heutzutage zunehmend Anhänger, z.B. im Wohnwagenbereich angeboten, die aufgrund ihrer Größe und damit ihres Gewichts nur noch unter Mühen von Hand verschoben werden können. Daherwurden Rangiersysteme entwickelt, die es ermöglichen, auch ohne Zugmaschine einen Anhänger mit Motorunterstützung zu verschieben bzw. zu drehen. Insbesondere wurden Rangiersysteme entwickelt, die an einem Anhänger montierbar bzw. nachrüstbar sind.

Aus der EP 0 827 898 A1 ist ein Rangiersystem mit einem Rangierantrieb für einen Anhänger bekannt, bei dem eine Befestigungseinrichtung fest mit dem Fahrgestell des Anhängers verbunden ist. Die Befestigungseinrichtung trägt einen relativ zu der Befestigungseinrichtung bewegbaren Träger, von dem wiederum ein Antriebsmotor mit einer von dem Antriebsmotor antreibbaren Antriebsrolle gehalten wird. Weiterhin ist ein Bewegungsmechanismus vorgesehen, zum Bewegen des Trägers zwischen einer Ruheposition, in der die Antriebsrolle von einem Rad bzw. Reifen des Anhängers getrennt ist, und einer Antriebsposition, in der die Antriebsrolle gegen das Rad bzw. den Reifen des Anhängers gedrückt wird.

Derartige Rangierantriebe werden wenigstens paarweise an einem Anhänger, und zwar gegenüberliegend an den jeweiligen Rädern des Anhängers angeordnet. Bei Doppelachsen-Anhängern ist es auch möglich, auf jeder Seite des Anhängers zwei Rangierantriebe, nämlich für jedes Anhängerrad einen eigenen Rangierantrieb, vorzusehen.

Der Anhänger wird geradeaus vorwärts bzw. geradeaus rückwärts bewegt, indem z.B. die Rangierantriebe die auf gegenüberliegenden Seiten des Anhängers befindlichen Räder mit der gleichen Geschwindigkeit und in die gleiche Richtung antreiben. Da die Räder eines Anhängers üblicherweise nicht lenkbar sind, werden Kurvenfahrten und Drehungen des Anhängers über die Rangierantriebe z.B. durch Antreiben der gegenüberliegenden Räder mit unterschiedlichen Geschwindigkeiten oder in unterschiedlichen Richtungen bewirkt.

Zum Beispiel können beide Rangierantriebe derart betrieben werden, dass ihre Antriebsrollen in die gleiche Richtung mit gleicher Geschwindigkeit drehen, so dass auch die von den Antriebsrollen angetriebenen Anhängerräder in die gleiche Richtung mit der gleichen Geschwindigkeit bewegt werden. Dadurch kann eine Vorwärts- bzw. Rückwärtsfahrt des Anhängers erreicht werden. Ebenso ist es möglich, nur einen der Rangierantriebe zu aktivieren, während der andere Rangierantrieb stillsteht. Dadurch wird eine Drehung um das stillstehende Rad erreicht.

Die Anhängerräder können auch entgegengesetzt angetrieben werden, so dass das eine Rad vorwärts und das andere Rad rückwärts dreht. Dadurch erfolgt eine Drehung des Anhängers auf der Stelle.

Manche Rangiersysteme erlauben eine Steuerung der Geschwindigkeit der Antriebsmotoren. Auf diese Weise werden die Geschwindigkeit der Fahrbewegung sowie der Radius während der Kurvenfahrt steuerbar.

Aus dem Stand der Technik sind Fernbedienungen zum Steuern der Rangierantriebe bekannt. Nach dem Bewegen der Träger in die Antriebspositionen und damit dem Andrücken der Antriebsrollen gegen die jeweiligen Räder des Anhängers kann ein Bediener mit Hilfe der Fernbedienung den Anhänger bewegen. Der Bediener kann sich dank der Fernbedienung frei um den Anhänger herum bewegen und den Anhänger an Hindernissen (wie z.B. Häuserwänden, Bäumen oder Fahrzeugen) vorbei steuern. Die Fernbedienung ermöglicht es dem Bediener, sich in einem geeigneten Blickwinkel und Abstand zum Anhänger zu stellen, um die gewünschte Bewegung des Anhängers abschätzen zu können.

Die aus dem Stand der Technik bekannten Fernbedienungen weisen Eingabegeräte wie Tasten oder Steuerhebel (Joysticks) auf, um die Bewegung des durch die Rangierantriebe bewegten Anhängers zu steuern. Mit diesen Eingabegeräten werden also nur indirekt die Drehrichtung und Drehgeschwindigkeit der einzelnen Antriebsrollen der Rangierantriebe gesteuert; primär wird die resultierende Bewegungsrichtung und Geschwindigkeit des gesamten Anhängers gesteuert.

So ist aus von der Anmelderin vertriebenen Rangiersystemen der Marke Mover® eine Fernbedienung bekannt, die eine feste Anzahl von Tasten zur Steuerung der Bewegung eines Anhängers aufweist. Durch Drücken einer ersten Taste wird eine Vorwärtsfahrt des Anhängers mit konstanter Geschwindigkeit bewirkt, das Drücken einer zweiten Taste bewirkt eine Rückwärtsfahrt des Anhängers. Außerdem sind vier weitere Tasten vorgesehen, die im gedrückten Zustand entsprechende Drehungen des Anhängers nach vorne links, vorne rechts, hinten links bzw. hinten rechts bewirken. Nachdem die Tasten losgelassen werden, kommt der Anhänger wieder zum Stehen.

Weiterhin ist aus der EP 2 360 543 A1 eine Fernbedienung zur Steuerung eines Anhängers mit einem Rangiersystem bekannt, mit deren Hilfe sich sowohl die Geschwindigkeit also auch Bewegungsrichtung des Anhängers fernsteuern lassen. Die Fernbedienung weist ein Eingabegerät mit einem mindestens zweidimensional beweglichen Griffteil in der Art eines Joysticks auf. Eine ähnliche Fernbedienung zur Steuerung eines Fahrzeugs wird in der DE 103 46 888 A1 gezeigt.

Eine weiterer Antrieb mit einer Fernbedienung ist aus der gattungsgemäßen DE 20 2009 005 524 U1 bekannt. Auch die Fernbedienung dieses Antriebs weist mehrere Bedientasten für die verschiedenen Richtungen der einzelnen Antriebe auf.

Eine weitere Fernbedienung ist in der EP 1 004 230 A2 gezeigt. Diese dient zum Steuern verschiedener Funktionen einer Landmaschine, nicht aber zur Steuerung eines Hilfsantriebes.

Die EP 1 488 836 A1 beschreibt eine Steuerung für ein ferngesteuertes Spielzeugauto, mit einem an der Unterseite eines Griffes angeordneten Leistungsregler und einem an einer Oberseite des Griffes angeordneten Lenkrad.

In der Praxis sieht sich ein Bediener oft mit einer komplexen Steuerungsaufgabe konfrontiert, da die bekannten Rangiersysteme nur ungenau mit einer Fernsteuerung steuerbar sind. Besonders bei komplexen Rangiermanövern mit erhöhter Kollisionsgefahr fällt es dem Bediener oft schwer, die Fahrbewegung des Anhängers richtig abzuschätzen und zu steuern. Dies ist insbesondere dann der Fall, wenn die Orientierung der vom Bediener gehaltenen Fernbedienung nicht mit der Orientierung des Anhängers übereinstimmt. In solchen Fällen kann es zur Verwechslung von Rechts- und Linksdrehungen bzw. Vorwärts- und Rückwärtsfahrt durch den Bediener kommen. Fährt der von den Rangierantrieben bewegte Anhänger z.B. auf den Bediener zu, und möchte der Bediener den Anhänger aus seiner Perspektive nach rechts lenken, entspricht dies einer Linksdrehung aus der Perspektive des Anhängers. Dieses Umdenken kann ungeübte Bediener überfordern.

Der Erfindung liegt daher die Aufgabe zugrunde, ein Anhänger-Rangiersystem mit Fernbedienung anzugeben, das den Bediener bei der Bewältigung seiner Rangieraufgabe unterstützt und ihm das Rangieren des Anhängers erleichtert.

Die Aufgabe wird erfindungsgemäß durch ein Rangiersystem nach Anspruch 1 gelöst. Vorteilhafte Ausgestaltungen der Erfindung sind in den abhängigen Ansprüchen angegeben.

Das Rangiersystem ist prinzipiell vollständig von dem Anhänger trennbar. Insbesondere kann das Rangiersystem auch später bei einem ansonsten funktionstüchtigen Anhänger nachgerüstet werden. Der Anhänger selbst stellt somit nicht einen Teil des Rangiersystems dar. Es erfolgen lediglich Wechselwirkungen zwischen dem Rangiersystem und dem Anhänger über entsprechende Schnittstellen. Zu den Schnittstellen zählt z.B. die Kraftübertragung von den Antriebsrollen des Rangiersystems auf die entsprechenden Räder bzw. Reifen des Anhängers.

Bei einem einachsigen Anhänger mit zwei Rädern kann das Rangiersystem zwei Rangierantriebe aufweisen, die auf gegenüberliegenden Seiten des Anhängers jeweils im Bereich eines Rads angeordnet sind, um das jeweilige Rad drehend anzutreiben. Der Anhänger kann geradeaus vorwärts bzw. geradeaus rückwärts bewegt werden, indem z.B. die Rangierantriebe die beiden Räder mit der gleichen Geschwindigkeit und in die gleiche Richtung antreiben. Kurvenfahrten und Drehungen des Anhängers bewirken die Rangierantriebe z.B. durch Antreiben der gegenüberliegenden Räder mit unterschiedlichen Geschwindigkeiten oder in unterschiedlichen Richtungen.

Bei doppelachsigen Anhängern ist es auch möglich, mehr als zwei Rangierantriebe, z.B. vier Rangierantriebe vorzusehen, wobei beispielsweise auf jeder Seite des Anhängers zwei Rangierantriebe vorgesehen sind, die jeweils ein Anhängerrad antreiben. Im Falle von doppelachsigen Anhängern werden alle auf einer Seite des Anhängers befindlichen und von Rangierantrieben angetriebenen Räder mit der gleichen Geschwindigkeit und in die gleiche Richtung angetrieben.

Sowohl das eindimensional verstellbare Stellelement als auch das drehbar verstellbare Drehelement weisen nur einen Freiheitsgrad der Verstellbarkeit auf, d.h. sie können nur in einer Dimension und maximal in zwei entgegengesetzte Richtungen verstellt werden. Beispielsweise handelt es sich bei dem Stellelement um ein Schiebeelement mit einem Schieber, wobei der Schieber relativ zum Gehäuse der Fernbedienung verschiebbar ist. Alternativ handelt es sich beim Stellelement um ein Eingabegerät wie z.B. ein Drehrad, Drehhebel oder Drehschalter, welcher sich - ähnlich wie das Mausrad einer Computermaus - in einer Dimension hin und her drehen und somit verstellen lässt. Allgemein können sogar Eingabegeräte mit komplexen Bewegungen als Stellelemente verwendet werden, solange die eigentliche Verstellung nur in einer Dimension, z.B. entlang einer gekrümmten Linie, möglich ist.

Das Drehelement kann z.B. ein Drehrad sein, das relativ zum Gehäuse der Fernbedienung drehbar ist.

Das Stellelement kann aus einer Ausgangsstellung heraus in mindestens eine Richtung verstellbar sein, wobei das Stellelement einen Rückstellmechanismus aufweisen kann, welcher das Stellelement nach einer Auslenkung bzw. Betätigung durch einen Bediener wieder in die Ausgangstellung zurückstellt. Dabei kann der Rückstellmechanismus z.B. eine oder mehrere Rückstellfedern oder sonstige elastische Elemente, welche eine Rückstellung des Stellelements in die Ausgangsstellung bewirken, aufweisen.

Ebenso kann das Drehelement aus einer Ausgangsstellung heraus in mindestens eine Richtung verstellbar sein, wobei das Drehelement einen Rückstellmechanismus aufweist, welcher das Drehelement nach einer Auslenkung bzw. Betätigung durch einen Bediener wieder in die Ausgangstellung zurückstellt. Auch hier kann der Rückstellmechanismus eine oder mehrere Rückstellfedern oder sonstige elastische Elemente aufweisen.

Durch die automatische Rückstellung des Stellelements und des Drehelements durch entsprechende Rückstellmechanismen kommt der durch die Rangierantriebe bewegbare Anhänger zum Stillstand, sobald der Bediener das Stellelement und/oder das Drehelement loslässt. Durch diesen sogenannten Fail-Safe Betrieb sollen Kollisionen des Anhängers mit Personen und Gegenständen verhindert werden, die durch unkontrollierte Fernsteuerung ohne Rückstellmechanismus verursacht werden.

Das Stellelement und das Drehelement sind vorzugsweise kontinuierlich verstellbar, d.h. das erste und das zweite Steuersignal zum Steuern der Rangierantriebe weisen einen kontinuierlichen Wertebereich zwischen einem Minimalwert und einem Maximalwert auf. Alternativ ist es möglich, dass das Stellelement und/oder Drehelement zwischen einer Vielzahl von diskreten Stellpositionen verstellt bzw. geschaltet werden kann. Die entsprechenden ersten und zweiten Steuersignale weisen in diesem Fall entsprechende diskrete Wertebereiche auf.

Das kontinuierlich verstellbare Stellelement und/oder Drehelement können wie bereits ausgeführt jeweils gegen Rückstellfedern oder sonstige Rückstellmechanismen von einem Bediener bewegt werden. Dabei kann z.B. die verwendete Rückstellfeder eine progressive Kennlinie aufweisen, d.h. je stärker die Aus-lenkung aus der Ausgangsstellung, desto höher ist die von der Rückstellfeder erzeugte Gegenkraft, und desto höher ist die gesteuerte Bewegungsgeschwindigkeit des Anhängers. Dabei kann die Gegen- bzw. Rückstellkraft überproportional steigen. Durch dieses haptische Feedback wird dem Bediener seine Steuerungsaufgabe insofern vereinfacht, dass er seinen Blick auf den zu rangierenden Anhänger richten kann, ohne den Verstellungsgrad von Stellelement und/oder Drehelement auf der Fern-bedienung zu betrachten.

In den Fällen, in denen das Stellelement und/oder Drehelement zwischen einer Vielzahl von diskreten Stellpositionen verstellt bzw. geschaltet werden kann, kann jede Stellposition durch einen erhöhten Verstellwiderstand bzw. eine Rasterung gekennzeichnet sein, welche dem Bediener ein haptisches Feedback über den Verstellungsgrad von Stellelement bzw. Drehelement gibt. Beispielsweise kann das Stellelement aus einer Ausgangstellung heraus in drei verschiedenen Stufen, welche drei verschiedenen Bewegungsgeschwindigkeiten des Anhängers entsprechen, verstellbar sein, wobei der Bediener anhand des Verstellwiderstands oder der Rasterung die verschiedenen Stufen spürt.

Durch die Rangierantriebe ist entsprechend dem von dem Stellelement erzeugten ersten Steuersignal eine Vorwärts- bzw. Rückwärtsbewegung des Anhängers bewirkbar. Zudem ist durch die Rangierantriebe entsprechend dem von dem Drehelement erzeugten zweiten Steuersignal eine Drehung des Anhängers um eine Hochachse des Anhängers bewirkbar.

Die Hochachse des Anhängers verläuft im Falle eines einachsigen Anhängers mit zwei Rädern vertikal in der Mitte zwischen den beiden Rädern des Anhängers. Im Falle von mehrachsigen Anhängern verläuft die Hochachse vertikal durch ein entsprechendes Zentrum, welches mittig zwischen den äußersten Rädern liegt.

So können beispielsweise durch die Rangierantriebe entsprechend einem von dem Stellelement erzeugten ersten, kontinuierlichen Steuersignal Vorwärts- und Rückwärtsbewegungen des Anhängers mit verschiedenen, kontinuierlich verstellbaren Geschwindigkeiten bewirkbar sein. Analog können beispielsweise durch die Rangierantriebe entsprechend einem von dem Drehelement erzeugten zweiten, kontinuierlichen Steuersignal Drehungen des Anhängers um seine Hochachse mit kontinuierlich verstellbaren Geschwindigkeiten bewirkbar sein.

In besonders einfachen Ausführungsformen kann das Stellelement und/oder das Drehelement nur zwischen z.B. drei verschiedenen Stellungen verstellt werden. So kann das Drehelement eine neutrale Stellung, eine Stellung zur Steuerung einer Linksdrehung des Anhängers sowie eine Stellung zur Steuerung einer Rechtsdrehung des Anhängers aufweisen. Entsprechend kann das Stellelement eine neutrale Stellung, eine Stellung zur Steuerung einer Vorwärtsbewegung des Anhängers sowie eine Stellung zur Steuerung einer Rückwärtsbewegung des Anhängers aufweisen.

Wird nur das Drehelement und nicht das Stellelement vom Bediener betätigt, wird der Anhänger durch die Rangierantriebe im Stand um seine Hochachse gedreht. Entsprechend wird der Anhänger durch die Rangierantriebe geradeaus vorwärts- bzw. geradeaus rückwärts bewegt, falls der Bediener nur das Stellelement und nicht das Drehelement betätigt.

Der Anhänger vollzieht also eine Drehung im Stand, falls nur das Drehelement betätigt wird. Werden sowohl Stellelement als auch Drehelement von einem Bediener gleichzeitig betätigt, vollzieht der Anhänger eine Kurvenfahrt. In beiden Fällen, d.h. im Falle einer Drehung im Stand und im Falle einer Kurvenfahrt, vollzieht der Anhänger folglich eine Drehung um seine Hochachse, d.h. eine Drehung im Koordinatensystem des Anhängers. Im Folgenden wird also davon ausgegangen, dass auch bei einer Kurvenfahrt zusätzlich zu der Vorwärts- bzw. Rückwärtsfahrt eine Drehung des Anhängers um seine Hochachse stattfindet, auch wenn der Anhänger von außen betrachtet eine Kurvenfahrt um ein Kreiszentrum ausführt, welches außerhalb des Anhängers liegt.

Werden sowohl Stellelement als auch Drehelement von einem Bediener gleichzeitig betätigt, können Kurvenfahrten des Anhängers mit variablen Kurvenradien und Geschwindigkeiten durch das Rangiersystem bewirkt werden. Durch die getrennte Steuerung der Vorwärts- bzw. Rückwärtsbewegung durch das Stellelement einerseits, und die Steuerung der Drehung des Anhängers um seine Hochachse durch das Drehelement andererseits kann der Anhänger mit Hilfe des Rangiersystems präzise und feinfühlig bewegt werden. Im Gegensatz zu z.B. zweidimensional verstellbaren Eingabegeräten kann der Bediener Bewegungsrichtung und Bewegungsgeschwindigkeit unabhängig voneinander und genau dosieren, da sowohl Drehelement als auch Stellelement eine geführte Bewegung mit nur einem Freiheitsgrad ermöglichen. Diese Trennung vereinfacht die Steuerungsaufgabe für den Bediener, da er Bewegungsrichtung und Bewegungsgeschwindigkeit nicht wie z.B. bei einem Joystick "ungeführt" mit dem gleichen Eingabegerät dosieren muss.

Ein weiterer Vorteil des beschriebenen Rangiersystems ist es, dass ein Bediener, unabhängig von seiner Position relativ zum Anhänger, die Drehung des Anhängers um seine Hochachse ohne Umdenken steuern kann. Wird die Fernbedienung z.B. vom Bediener so gehalten, dass die Drehebene des Drehelements horizontal ausgerichtet ist, so stimmt die Drehrichtung des Drehelements mit der gewünschten Drehrichtung des Anhängers überein. Dadurch wird es dem Bediener möglich, auf sehr einfache und intuitive Weise zu erkennen, in welche Richtung er das Drehelement drehen muss, damit sich der Anhänger in eine gewünschte Richtung dreht.

Die Drehebene des Drehelements muss nicht notwendigerweise exakt horizontal ausgerichtet sein, sondern auch ein Neigungswinkel zwischen der Drehebene des Drehelements und der Horizontalen führt zu dem gewünschten Effekt, nämlich der Gleichsinnigkeit der Drehrichtungen von Drehelement und Anhänger.

Weiterhin kann das Gehäuse der Fernbedienung derart gestaltet sein, dass sich seine maximale räumliche Ausdehnung in Richtung einer Längsachse erstreckt, das Stellelement in Richtung dieser Längsachse verstellbar ist und eine Drehachse des Drehelements senkrecht auf der Längsachse steht.

Durch die maximale räumliche Ausdehnung des Gehäuses der Fernbedienung kann der Bediener intuitiv die Längsachse, entlang der auch das Stellelement verstellbar ist, erkennen und mit der Orientierung des Anhängers vergleichen. Dem Bediener wird es somit erleichtert, die Fernbedienung entsprechend der relativen Orientierung des Anhängers auszurichten.

Das Stellelement und das Drehelement können z.B. auf einer flachen Oberfläche des Gehäuses der Fernbedienung angeordnet sein, wobei das Stellelement in einer Richtung der flachen Oberfläche verstellbar ist und eine Drehebene des Drehelements parallel zu der flachen Oberfläche verläuft.

Des Weiteren kann das Stellelement aus einer Ausgangsstellung heraus in zwei entgegengesetzte Richtungen verstellbar sein, wobei durch entsprechende Verstellung des Stellelements in eine Richtung eine Vorwärtsbewegung und durch eine Verstellung des Stellelements in die andere Richtung eine Rückwärtsbewegung des Anhängers steuerbar ist.

Die Fernbedienung kann vom Benutzer auf mindestens zwei verschiedene Arten in der Hand gehalten werden: In einer sogenannten Normalausrichtung und in einer um 180° gedrehten Gegenausrichtung. Hält der Bediener die Fernbedienung in Normalausrichtung, so bewirkt eine Verstellung des Stellelements vom Bediener weg eine Vorwärtsbewegung des Anhängers. Umgekehrt bewirkt eine Verstellung des Stellelements zum Bediener hin eine Rückwärtsbewegung des Anhängers. Die Fernbedienung kann vom Bediener vorzugsweise in Normalausrichtung gehalten werden, wenn der Bediener z.B. seitlich neben oder hinter einem vorwärtsfahrenden Anhänger herläuft.

Die in Gegenausrichtung gehaltene Fernbedienung kommt z.B. dann zur Anwendung, wenn sich der vorwärtsfahrende Anhänger auf den Bediener zu bewegt, ihm also entgegen fährt. Hält der Bediener die Fernbedienung in Gegenausrichtung, so bewirkt eine Verstellung des Stellelements zum Bediener hin eine Vorwärtsbewegung des Anhängers ebenfalls zum Bediener hin. Durch intuitive Verstellung des Stellelements in Richtung zum Bediener hin wird folglich der Anhänger tatsächlich in Richtung zum Bediener hin bewegt, was einer Vorwärtsbewegung des Anhängers entspricht.

Die in Gegenausrichtung gehaltene Fernbedienung kann somit die Steuerung der Bewegungsrichtung und Bewegungsgeschwindigkeit des Anhängers in gewissen Situationen erleichtern. Dem Bediener bleibt ein Umdenken erspart.

Die Fernbedienung kann eine Übermittlungseinheit aufweisen, welche ausgebildet ist, um die von dem Stellelement und dem Drehelement erzeugten Steuersignale über eine Funkverbindung, eine optische Verbindung oder eine Kabelverbindung an eine am Anhänger anordenbare Empfangsvorrichtung zu übertragen.

Als optische Verbindung kann insbesondere eine Infrarotverbindung zwischen der Übermittlungseinheit der Fernbedienung und der am Anhänger anordenbaren Empfangsvorrichtung hergestellt werden. Zu diesem Zweck kann die Übermittlungseinheit der Fernbedienung mindestens zwei Infrarotsender aufweisen, die auf gegenüberliegenden Seiten des Gehäuses der Fernbedienung angebracht sind, um die beschriebene Drehbarkeit der Fernbedienung in Normalausrichtung und Gegenausrichtung zu gewährleisten. Beispielsweise können die mindestens zwei Infrarotsender derart am Gehäuse der Fernbedienung angeordnet sein, dass die Abstrahlung der Infrarotsender jeweils in Normalausrichtung und Gegenausrichtung erfolgt.

Die von dem Stellelement und dem Drehelement erzeugten Steuersignale müssen in konkrete Antriebssignale für die einzelnen Rangierantriebe umgewandelt werden, wobei ein Antriebssignal die Drehrichtung und Drehgeschwindigkeit der jeweiligen Antriebsrolle des jeweiligen Rangierantriebes bestimmt. Die Umwandlung der Steuersignale in Antriebssignale findet vorzugsweise in der am Anhänger anordenbaren Empfangsvorrichtung statt, die auch eine Steuerungseinrichtung für die Rangierantriebe aufweist. Die Antriebssignale werden anschließend von der Empfangsvorrichtung an die Rangierantriebe übertragen.

Alternativ kann die Umwandlung des ersten und zweiten Steuersignals in entsprechende Antriebssignale für die einzelnen Rangierantriebe auch direkt in der Fernbedienung erfolgen, wobei die Übermittlungseinheit dann anstelle des ersten und zweiten Steuersignals die Antriebssignale für die einzelnen Rangierantriebe über eine Funkverbindung, eine optische Verbindung oder eine Kabelverbindung an die am Anhänger anordenbare Empfangsvorrichtung über-trägt.

Die Übertragung der Antriebssignale von der Empfangsvorrichtung an die einzelnen Rangierantriebe kann über Kabelverbindungen oder weitere Funkverbindungen erfolgen.

Auf dem Gehäuse der Fernbedienung, dem Stellelement oder dem Drehelement kann eine sichtbar angebrachte erste Markierung oder Abbildung vorgesehen sein, die diejenige Richtung kennzeichnet, in der das Stellelement verstellt werden muss, um eine Vorwärts- oder Rückwärtsbewegung des Anhängers zu steuern.

Zudem kann ergänzend oder alternativ auf dem Gehäuse der Fernbedienung, dem Stellelement oder dem Drehelement eine sichtbar angebrachte zweite Markierung oder Abbildung vorgesehen sein, die diejenige Richtung kennzeichnet, in der das Drehelement gedreht werden muss, um eine Links- oder Rechtsdrehung des Anhängers zu steuern.

Solche erste und/oder zweite Markierungen oder Abbildungen erleichtern die Bedienung der Fernbedienung, da der Bediener die Auswirkung einer Verstellung des Stellelements auf die Bewegung des Anhängers besser abschätzen kann. Zu diesem Zweck kann der Bediener die Fernbedienung derart ausrichten, dass die durch die Abbildungen oder Markierungen definierte Orientierung der Fernbedienung mit der tatsächlichen Orientierung des Anhängers übereinstimmt. Insbesondere kann der Bediener anhand der Markierung oder Abbildung entscheiden, ob er die Fernbedienung in Normalausrichtung oder in Gegenausrichtung hält.

Optional können die erste und die zweite Markierung/Abbildung kombiniert und durch eine gemeinsame Markierung/Abbildung ersetzt werden.

Die Fernbedienung kann optional ein Leuchtmittel aufweisen und kann als Taschenlampe verwendet werden.

Die Fernbedienung kann optional eine Libelle aufweisen und das Gehäuse der Fernbedienung kann derart ausgestaltet sein, dass die Fernbedienung als Wasserwaage verwendet werden kann.

Die Fernbedienung kann eine Totmanneinrichtung zum Detektieren einer Hand an dem Gehäuse der Fernbedienung und zum Blockieren des ersten Steuersignals und/oder des zweiten Steuersignals, falls keine Hand an dem Gehäuse der Fernbedienung detektiert wird, aufweisen. Insbesondere kann die Totmanneinrichtung ein Detektionssignal erzeugen, wobei das Detektionssignal anzeigt, ob die Fernbedienung von einem Bediener ordnungsgemäß in der Hand gehalten wird. Beispielsweise ist das von der Totmanneinrichtung erzeugte Detektionssignal binär, wobei ein Signalwert die Anwesenheit einer menschlichen Hand und der andere Signalwert die Abwesenheit einer menschlichen Hand am Gehäuse der Fernbedienung anzeigt. Zu diesem Zweck kann die Totmanneinrichtung z.B. mechanische, optische, thermische oder elektrische Berührungssensoren, oder eine Kombination solcher Sensoren, aufweisen. Insbesondere kann die Totmanneinrichtung Sensoren zum Erkennen eines Hautkontakts aufweisen, wobei am Gehäuse der Fernbedienung z.B. die Hautfeuchtigkeit der menschlichen Hand gemessen und erkannt wird.

Geht aus dem von der Totmanneinrichtung erzeugten Detektionssignal hervor, dass die Fernbedienung nicht bestimmungsgemäß von einem Bediener in der Hand gehalten wird, werden Steuersignale, wie z.B. die von dem Stellelement und dem Drehelement erzeugten Steuersignale zum Steuern der Rangierantriebe, blockiert bzw. nicht an die Rangierantriebe weitergeleitet. Zu diesem Zweck können z.B. entsprechende Stromkreise zur Erzeugung oder Übermittlung der Steuersignale durch die Totmanneinrichtung unterbrochen werden. Beispielsweise werden die entsprechenden Steuersignale nicht in der Fernbedienung erzeugt, falls keine Hand detektiert wird, auch wenn das Stellelement und/oder das Drehelement verstellt werden. Alternativ werden die entsprechenden Steuersignale zwar stets erzeugt, aber nur dann an die am Anhänger anordenbare Empfangsvorrichtung übertragen, falls die Totmanneinrichtung erkennt, dass ein Bediener die Fernbedienung bestimmungsgemäß in der Hand hält.

Alternativ kann das von der Totmanneinrichtung erzeugte Detektionssignal als Stoppsignal zusätzlich zu den Steuersignalen an die Empfangsvorrichtung übertragen werden. Letztere entscheidet dann darüber, ob die Steuersignale tatsächlich zur Ansteuerung der Rangierantriebe verwendet werden.

Durch die Totmanneinrichtung kann eine unbeabsichtigte Fernsteuerung der Rangierantriebe durch eine unbeabsichtigte Verstellung des Stellelements und/oder des Drehelements verhindert werden. Zudem können weitere oder sogar alle Steuersignale, die von der Fernbedienung an die Rangierantriebe übermittelt werden, durch die Totmanneinrichtung blockiert werden.

Bei einer Variante kann die Fernbedienung einen Empfänger zum Empfangen von Rückmeldungssignalen aufweisen, die von der am Anhänger anordenbaren Empfangsvorrichtung gesendet werden. Diese Rückmeldungssignale enthalten z.B. Informationen über den Ladezustand einer Batterie, welche am Anhänger angeordnet ist und die Rangierantriebe speist. Weiterhin können diese Rückmeldungssignale Informationen über den momentanen Anstellzustand der Rangierantriebe, d.h. darüber, ob die einzelnen Antriebsrollen an den jeweiligen Rädern angestellt sind, enthalten.

Die Fernbedienung kann verschiedene Anzeigen und Leuchtdioden aufweisen, welche den Zustand des Rangierantriebs, den Ladezustand der Batterie, Probleme und Störungen der Funkverbindung und/oder die relative Position des Anhängers anzeigen.

Insbesondere kann die Fernbedienung Betätigungselemente aufweisen, wobei nur bei dem Betätigen von wenigstens zwei der Betätigungselemente ein Signal zum Anstellen der Antriebsrollen an die jeweiligen Räder in Antriebsposition erzeugbar ist.

Diese und weitere Vorteile und Merkmale der Erfindung werden nachfolgend anhand von Beispielen unter Zuhilfenahme der begleitenden Figuren näher erläutert. Es zeigen:
Fig. 1 in schematischer Seitenansicht einen Anhänger mit einem an dem Anhänger angebrachten Rangierantrieb und eine Fernbedienung;
Fig. 2 eine perspektivische Ansicht einer beispielhaften Fernbedienung gemäß der Erfindung; und
Fig. 3 eine Draufsicht auf eine beispielhafte Fernbedienung gemäß der Erfindung.

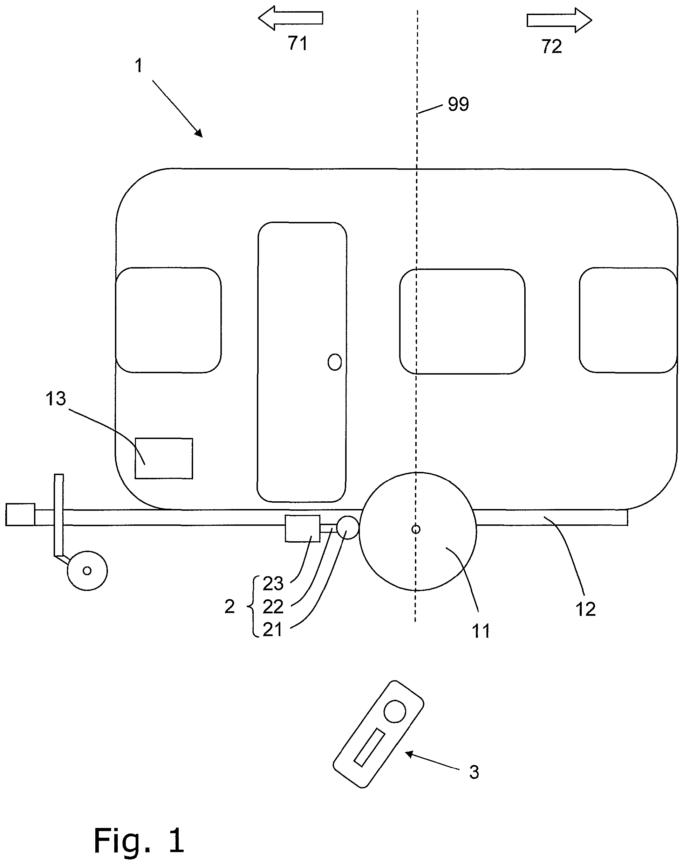

Fig. 1 zeigt in schematischer Seitenansicht einen Anhänger 1 mit einem an dem Anhänger 1 angebrachten beispielhaften Rangierantrieb 2. Der Rangierantrieb 2 ist im Bereich eines Rades 11 am Fahrgestell 12 des Anhängers 1 befestigt. Der Rangierantrieb 2 weist eine Bewegungseinrichtung 23, einen Träger 22, eine Antriebsrolle 21 sowie einen in Fig. 1 nicht dargestellten Antriebsmotor auf.

Über die Bewegungseinrichtung 23 ist der Rangierantrieb 2 am Fahrgestell 12 befestigt. Die Bewegungseinrichtung 23 ist am Fahrgestell 12 angebracht und kann den von ihr gehaltenen, relativ zur ihr bewegbaren Träger 22, bewegen. An dem Träger 22 ist die drehbar gelagerte Antriebsrolle 21 befestigt. Mit Hilfe der Bewegungseinrichtung 23 kann nun der Träger 22 zwischen einer Ruheposition, in der die Antriebsrolle 21 von dem Rad 11 getrennt ist, und einer Antriebsposition, in der die Antriebsrolle 21 gegen das Rad 11 gedrückt wird, bewegt werden. In Fig. 1 ist der Rangierantrieb 2 in Antriebsposition dargestellt.

Der Antriebsmotor treibt die Antriebsrolle 21 drehend an. Der Antriebsmotor ist z.B. im Inneren der Antriebsrolle 2 angeordnet. Alternativ kann der Antriebsmotor auch außerhalb der Antriebsrolle 21 angeordnet sein, z.B. kann der Antriebsmotor am Träger 22 befestigt sein. Optional kann eine Getriebeeinrichtung im Kraftfluss zwischen dem Antriebsmotor und der Antriebsrolle 21 vorgesehen sein, um die verhältnismäßig hohe Drehzahl des Antriebsmotors in eine niedrige Drehzahl für die Antriebsrolle 21 zu übersetzen.

Bei dem in Fig. 1 schematisch dargestellten Rangierantrieb 2 kann es sich auch um einen solchen handeln, wie aus der EP 0 827 898 A1 und EP 1 925 540 A1 bekannt. Selbstverständlich kann der Rangierantrieb auch in andere Weise aufgebaut sein.

Der Anhänger 1 weist ein zweites, auf der gegenüberliegenden Seite des Anhängers 1 befindliches Rad 11 auf, welches in Fig. 1 nicht sichtbar ist. An diesem zweiten Rad ist ebenfalls ein Rangierantrieb 2 angeordnet. Eine Hochachse 99 des Anhängers 1 verläuft vertikal mittig zwischen den beiden Rädern 11 des Anhängers 1.

Die Rangierantriebe 2 dienen dazu, die Räder 11 dann drehend anzutreiben, wenn der Anhänger von einer Zugmaschine getrennt ist. In diesem Fall ist es möglich, dass die Antriebsrollen 21 an die Laufflächen der Räder 11 gedrückt werden, so dass nachfolgend die Antriebsmotoren über die Antriebsrollen 21 die Räder 11 antreiben.

Bei den Antriebsmotoren der Rangierantriebe 2 handelt es sich z.B. um Elektromotoren, die unabhängig voneinander angesteuert werden. Die Drehzahl der Antriebsmotoren der Rangierantriebe 2 ist vorzugsweise stufenlos veränderbar, um ein besonders feinfühliges Beeinflussen der Fahrbewegung des Anhängers 1 zu realisieren. Alternativ ist es für eine einfachere Bauart denkbar, dass die Drehzahl im Wesentlichen unveränderbar ist, so dass die Antriebsmotoren lediglich ein- oder ausgeschaltet werden. Eine Drehrichtungsumkehr der Antriebsmotoren muss in jedem Fall möglich sein, um die gewünschten Rangierbewegungen vollziehen zu können.

Je nach Ansteuerung der Rangierantriebe 2 ist es möglich, die Räder 11 im Gleichlauf, d.h. mit gleicher Drehzahl und gleicher Richtung anzutreiben. Dann vollzieht der Anhänger 1 eine Geradeausbewegung in Vorwärtsrichtung 71 oder Rückwärtsrichtung 72. Dabei ist die Vorwärtsrichtung 71 diejenige Richtung, in der der Anhänger normalerweise von einer Zugmaschine gezogen wird. Als Rückwärtsrichtung 72 wird die der Vorwärtsrichtung 71 entgegengesetzte Richtung bezeichnet. Vorwärtsrichtung 71 und Rückwärts-richtung 72 sind in Fig. 1 durch entsprechende symbolische Pfeile illustriert.

Wenn jedoch die Rangierantriebe 2 die Räder 11 unterschiedlich antreiben, ist eine entsprechende Kurvenbewegung des Anhängers 1 die Folge.

So ist es z.B. möglich, lediglich einen Rangierantrieb 2 vorwärts anzutreiben, so dass sich nur ein Rad 11 vorwärts dreht, während der andere Rangierantrieb 2 abgeschaltet ist und das andere Rad 11 stillsteht. Diese Ansteuerung hat eine Kurvenfahrt um das stillstehende Rad 11 zur Folge.

In einem Fall ist es möglich, dass ein Rangierantrieb 2 mit hoher Geschwindigkeit und der andere Rangierantrieb 2 mit geringer Geschwindigkeit in die gleiche Richtung antreiben, so dass sich ein Rad 11 mit höherer Geschwindigkeit als das andere Rad 11 dreht. Dann bewegt sich der Anhänger 1 auf einem entsprechenden Kurvenradius in Richtung desjenigen Rades 11, welches mit geringerer Geschwindigkeit angetrieben wird.

Wenn die Rangierantriebe 2 die Räder 11 mit unterschiedlicher Drehrichtung antreiben, kann eine Drehung des Anhängers auf der Stelle, d.h. um die Hochachse 99 des Anhängers bewirkt werden.

Des Weiteren ist am Anhänger 1 eine Empfangsvorrichtung 13 mit einer Steuereinrichtung angeordnet, die die von einer Fernbedienung 3 gesendeten Steuersignale empfängt, in Antriebssignale für die einzelnen Rangierantriebe 2 umrechnet und die Antriebssignale z.B. über Funk- oder Kabelverbindungen an die jeweiligen Rangierantriebe 2 weiterleitet. Falls von der Fernbedienung 3 bereits die Antriebssignale für die einzelnen Rangierantriebe 2 an die Empfangsvorrichtung 13 gesendet werden, wird eine Umwandlung der Steuersignale in Antriebssignale in der Empfangsvorrichtung 13 überflüssig.

Die Umwandlung der Steuersignale in Antriebssignale für die einzelnen Rangierantriebe 2 findet also z.B. in der Empfangsvorrichtung 13 oder in der Fernbedienung 3 statt. In beiden Fällen kann diese Umwandlung durch eine entsprechende Steuerungseinheit ausgeführt werden. Diese Steuerungseinheit kann einen Mikrocontroller umfassen, welcher die Umwandlung gemäß einer dedizierten Software ausführt, welche zu diesem Zweck auf den Mikrocontroller geladen werden kann. Alternativ kann auch eine elektronische Schaltung als Steuerungseinheit zur Umwandlung der Steuersignale in Antriebssignale verwendet werden.

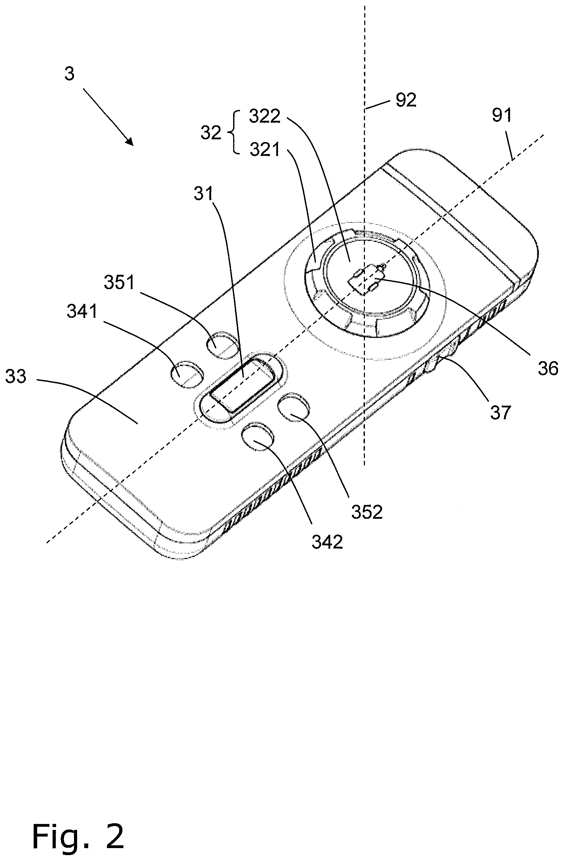

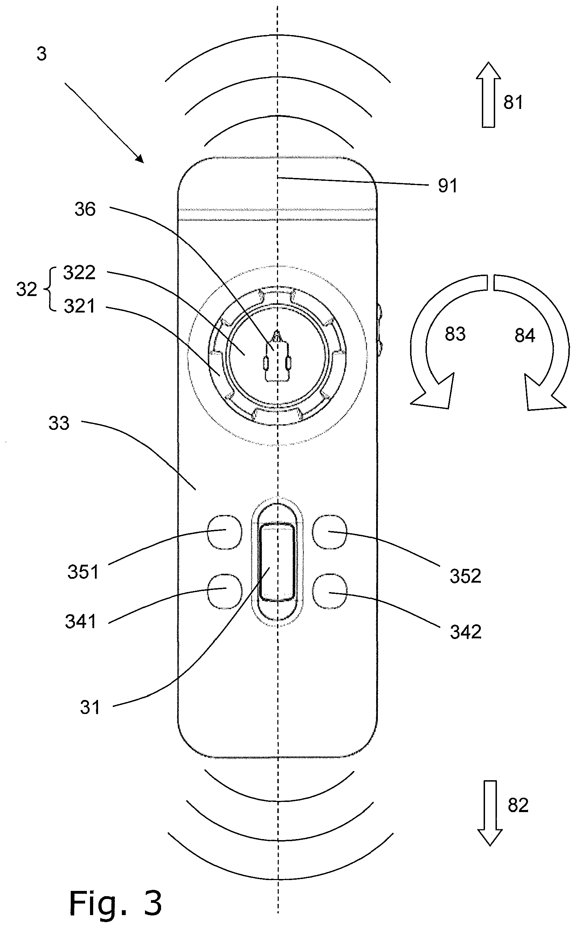

Fig. 2 zeigt eine perspektivische Ansicht einer beispielhaften Fernbedienung gemäß der Erfindung. Fig. 3 zeigt eine Draufsicht auf die beispielhafte Fernbedienung gemäß der Erfindung.

In der abgebildeten Ausführungsform der Fernbedienung 3 ist ein eindimensional verstellbares Stellelement in Form eines Schiebeelements 31 ausgebildet; ein drehbar verstellbares Drehelement ist in Form eines Drehrads 32 realisiert.

Ein Gehäuse 33 der Fernbedienung 3 weist eine Längsform mit einer längeren Seite und einer kürzeren Seite auf. Die längere Seite ist gekennzeichnet durch eine maximale räumliche Ausdehnung des Gehäuses 33 der Fernbedienung 3, und diese längere Seite definiert im Folgenden die Orientierung einer Längsachse 91 der Fernbedienung 3. Vorzugsweise weist die kürze Seite eine räumliche Ausdehnung von wenigen cm auf, so dass die kürzere Seite mit einer Hand umgriffen werden kann. Das gesamte Gehäuse 33 ist derart dimensioniert, dass die Fernbedienung einhändig haltbar ist.

Das auf dem Gehäuse 33 der Fernbedienung 3 angeordnete Schiebeelement 31 weist einen eindimensional in Richtung der Längsachse 91 verstellbaren Schieber auf. Das Schiebeelement 31 kann aus einer Ausgangsstellung in zwei entgegengesetzte Richtungen kontinuierlich entlang der Längsachse 91 verstellt werden. Diese beiden entgegengesetzten Richtungen werden im Folgenden als einer Normalausrichtung entsprechenden Normalrichtung 81 und einer Gegenausrichtung entsprechenden Gegenrichtung 82 bezeichnet und sind in Fig. 3 durch entsprechende symbolische Pfeile illustriert.

Wird der Schieber des Schiebeelements 31 aus der Ausgangstellung in Normal-richtung 81 geschoben, ohne dass das Drehrad 32 betätigt wird, werden Steuersignale für die Rangierantriebe 2 erzeugt, die eine Bewegung des Anhängers 1 in Vorwärtsrichtung 71 bewirken. Entsprechend werden Steuersignale für die Rangierantriebe 2 erzeugt, die eine Bewegung des Anhängers 1 in Rückwärtsrichtung 72 bewirken, falls der Schieber des Schiebeelements 31 aus der Ausgangstellung in Gegenrichtung 82 verschoben wird. Dabei kann die Geschwindigkeit der Vorwärtsbewegung bzw. Rückwärtsbewegung durch die Auslenkung des Schiebeelements 31 beeinflusst werden. Der Zusammenhang zwischen dem Grad der Verstellung des Schiebeelements 31 und der Geschwindigkeit des Anhängers 1 kann z.B. direkt proportional sein, d.h. je weiter der Schieber in eine Richtung verschoben wird, desto höher die Drehzahl der Antriebsmotoren und die resultierende Geschwindigkeit des Anhängers 1. Alternativ kann ein progressiver bzw. exponentieller Zusammenhang zwischen dem Grad der Verstellung des Schiebeelements 31 und der Geschwindigkeit des Anhängers 1 bestehen. Ein progressiver Zusammenhang ermöglicht z.B. ein verhältnismäßig langsames Anfahren des Anhängers 1.

Alternativ kann das Schiebeelement 31 in diskreten Schritten verstellt werden, so dass der Bediener zwischen verschiedenen Fahrgeschwindigkeiten des Anhängers 1 wählen kann. Bei Verwendung von Antriebsmotoren ohne Drehzahlsteuerung, die lediglich ein- und ausschaltbar sind, kann eine Verstellmöglichkeit des Schiebeelements 31 in Normalrichtung 81 und eine Verstellmöglichkeit des Schiebeelements 31 in Gegenrichtung 82 ausreichend sein.

Optional umfasst das Schiebeelement 31 eine oder mehrere Federn, die ausgebildet sind, um den Schieber nach Betätigung durch den Bediener wieder in die Ausgangsstellung zurück zu bewegen.

In der in Fig. 2 und Fig. 3 illustrierten Ausführungsform der Fernbedienung 3 ist das Drehrad 32 flach auf dem Gehäuse 33 der Fernbedienung 33 angeordnet, so dass die Drehebene des Drehrads 32 parallel zu der Oberfläche des Gehäuses 33 verläuft. Zudem sind das Schiebeelement 31 und das Drehrad 32 auf der gleichen Seite des Gehäuses 33 angeordnet, und die Drehachse 92 des Drehrades 91 steht senkrecht auf der Längsachse 91. Weiterhin sind das Schiebeelement 31 und das Drehrad 32 entlang der Längsachse 91 derart angeordnet, dass das Drehrad 32 in Normalrichtung 81 gesehen über bzw. hinter dem Schiebeelement 31 angeordnet ist.

Wird die Fernbedienung 3 von einem Bediener in Normalrichtung 81 gehalten, ist das Drehrad 32 weiter vom Bediener entfernt als das Schiebeelement 31. Diese Anordnung hat den Vorteil, dass der Bediener intuitiv und ohne weitere Markierungen oder Abbildungen erkennen kann, ob er die Fernbedienung 3 in Normalrichtung 81 oder in Gegenrichtung 82 hält.

Für den Fachmann ist jedoch leicht erkennbar, dass eine Vielzahl von geometrischen Anordnungen des Schiebeelements 31 und des Drehrads 32 auf dem Gehäuse 33 der Fernbedienung 3 möglich sind, um eine erfindungsgemäße Fernbedienung 3 des Rangiersystems zu realisieren. Beispielsweise können die in Fig. 2 und Fig. 3 dargestellten Positionen von Schiebeelement 31 und Drehrad 32 vertauscht sein, oder das Schiebeelement 31 und das Drehrad 32 können nebeneinander oder seitlich versetzt bezüglich der Längsachse 91 auf dem Gehäuse 33 angebracht sein.

Das Drehrad 32 kann aus einer Ausgangsstellung heraus in zwei entgegengesetzte Richtungen kontinuierlich drehbar verstellt werden. Diese beiden entgegengesetzten Richtungen werden im Folgenden als Uhrzeigersinn 84 und Gegenuhrzeigersinn 83 bezeichnet und sind in Fig. 3 durch entsprechende symbolische Pfeile illustriert.

Das in Ausgangsstellung befindliche, vom Bediener nicht betätigte Drehrad 32 bewirkt, dass der Anhänger 1, abhängig von der Stellung des Schiebeelements 31, entweder geradeaus vorwärts oder rückwärts fährt, oder komplett still steht.

Wird das Drehrad 32 aus der Ausgangsstellung im Uhrzeigersinn 84 gedreht, werden Steuersignale für die Rangierantriebe 2 erzeugt, die eine Rechtsdrehung des Anhängers 1 um seine Hochachse 99 bewirken. Diese Rechtsdrehung um die Hochachse 99 des Anhängers 1 wird bei nicht betätigtem Schiebeelement 31 beispielsweise dadurch realisiert, dass beide Räder 11 durch die Rangierantriebe 2 mit gleicher Geschwindigkeit angetrieben werden, wobei das (in Vorwärtsrichtung 71 des Anhängers 1 gesehen) linke Rad 11 in Vorwärtsrichtung 71 und das rechte Rad 11 in Rückwärtsrichtung 72 angetrieben wird.

Alternativ kann die Rechtsdrehung um die Hochachse 99 des Anhängers 1 bei nicht betätigtem Schiebeelement 31 realisiert werden, in dem das linke Rad 11 in Vorwärtsrichtung 71 angetrieben wird und das rechte Rad 11 nicht angetrieben wird. Diese alternative Ansteuerung der Rangierantriebe 2 hat zur Folge, dass das linke Rad 11 einen Bogen um das feststehende rechte Rad 11 fährt.

Weiterhin kann mit Hilfe der Fernbedienung 3 die Art der Drehung des Anhängers 1 im Stand, d.h. bei nicht betätigtem Schiebeelement 31, gesteuert werden. Dabei werden durch das Drehelement 32, z.B. abhängig von der Verstellung des Drehelements 32, Steuersignale erzeugt, die (a) eine Drehung im Stand mit gegensinnig angetriebenen Rädern bewirken oder die (b) eine Dre-hung im Stand mit nur einem angetriebenen Rad und einem feststehenden Rad bewirken. Beispielsweise bewirkt eine geringere Verstellung des Drehelements 32 in eine Richtung eine entsprechende Drehung mit nur einem angetriebenen Rad, wobei das andere Rad feststeht, und eine stärkere Verstellung des Drehelements 32 eine entsprechende Drehung mit gegensinnig angetriebenen Rädern. Allgemein können über die Verstellung des Drehelements 32 unterschiedliche Dreh- bzw. Kurvengeschwindigkeiten des Anhängers 1 im Stand gesteuert werden.

Entsprechend werden Steuersignale für die Rangierantriebe 2 erzeugt, die eine Linksdrehung des Anhängers 1 um sein Hochachse 99 bewirken, falls das Drehrad 32 aus der Ausgangsstellung im Gegenuhrzeigersinn 83 gedreht wird. Die Linksdrehung um die Hochachse 99 des Anhängers 1 wird bei nicht betätigtem Schiebeelement 31 beispielsweise dadurch realisiert, dass beide Räder 11 durch die Rangierantriebe 2 mit gleicher Geschwindigkeit angetrieben werden, wobei das (in Vorwärtsrichtung 71 des Anhängers 1 gesehen) rechte Rad 11 in Vorwärtsrichtung 71 und das linke Rad 11 in Rückwärtsrichtung 72 angetrieben wird.

Alternativ kann die Linksdrehung um die Hochachse 99 des Anhängers 1 bei nicht betätigtem Schiebeelement 31 realisiert werden, in dem das rechte Rad 11 in Vorwärtsrichtung 71 angetrieben wird und das linke Rad 11 nicht angetrieben wird. Diese alternative Ansteuerung der Rangierantriebe 2 hat zur Folge, dass das rechte Rad 11 einen Bogen um das feststehende linke Rad 11 fährt.

Dabei kann die Drehgeschwindigkeit der entsprechenden Drehungen des Anhä-ngers 1 durch den Grad der Verstellung des Drehrads 32 beeinflusst werden. Der Zusammenhang zwischen dem Grad der Verstellung des Drehrads 32 und der Drehgeschwindigkeit der Drehung des Anhängers 1 kann z.B. direkt proportional sein, d.h. je weiter das Drehrad 32 im Uhrzeigersinn 84 bzw. Gegenuhrzeigersinn 83 gedreht wird, desto höher ist die resultierende Drehgeschwindigkeit des Anhängers 1. Alternativ kann auch ein progressiver Zusammenhang zwischen dem Grad der Verstellung des Drehrads 32 und der Drehgeschwindigkeit des Anhängers 1 ähnlich wie beim Schiebeelement 31 bestehen.

Alternativ kann das Drehrad 32 in diskreten Schritten verstellt werden, so dass der Bediener zwischen verschiedenen Drehgeschwindigkeiten des Anhängers 1 wählen kann. Bei Verwendung von Antriebsmotoren ohne Drehzahlsteuerung, d.h. bei Antriebsmotoren die nur ein- und ausschaltbar sind und eine Drehrichtungsumkehr ermöglichen, kann eine Verstellmöglichkeit des Drehrads 32 im Uhrzeigersinn 84 und eine Verstellmöglichkeit des Drehrads 32 im Gegenuhrzeigersinn 83 ausreichend sein.

Optional umfasst das Drehrad 32 eine oder mehrere Federn, die ausgebildet sind, um das Drehrad 32 nach Betätigung durch den Bediener wieder in die Ausgangsstellung zurück zu drehen.

Bei dem Drehrad 32 handelt es sich nicht notwendigerweise um ein vollständiges Rad. Beispielsweise muss nicht das gesamte Drehrad 32 relativ zum Gehäuse 33 drehbar sein, sondern z.B. nur ein äußerer Drehring 321, der sich um eine nicht drehbare Kreisscheibe 322 drehen kann. In alternativen Ausführungsformen können auch andere Arten von Drehelementen wie z.B. unvollständige Drehräder, Drehhebel, Drehknöpfe, und ähnliche verwendet werden.

Weiterhin ist für die Erfindung die Orientierung der Ausgangsstellung des Drehrades 32 nicht wesentlich, da das Drehelement 32 aus jeder beliebigen Richtung vom Bediener gegriffen und gedreht werden kann.

Durch gleichzeitiges Verstellen des Drehrads 32 und des Schiebeelements 31 können zahlreiche Fahrmanöver des Anhängers 1 mit unterschiedlichen Geschwindigkeiten und Kurvenradien sowohl in Vorwärtsfahrt als auch in Rück-wärtsfahrt gesteuert werden. Beispielsweise bewirkt eine Verstellung des Schiebeelements 31 in Normalrichtung 81 bei gleichzeitiger Verstellung des Drehrads 32 im Gegenuhrzeigersinn 83 eine Links-Kurvenfahrt des Anhängers 1 in Vorwärtsrichtung 71, welche durch Antreiben des linken Rads 11 mit einer geringeren Drehzahl und durch Antreiben des rechten Rads 12 mit höherer Drehzahl, jeweils durch den entsprechenden Rangierantrieb 2, bewirkt wird. Je stärker das Drehrad 32 bei konstanter Verstellung des Schiebeelements 32 verstellt wird, desto kleiner wird der Kurvenradius der bewirkten Kurvenfahrt des Anhängers 1. Umgekehrt bewirkt z.B. eine stärkere Verstellung des Schiebeelements 32 bei konstanter Verstellung des Drehrads 32 einen kleineren Kurvenradius der Kurvenfahrt des Anhängers 1.

Eine in Fig. 2 und 3 nicht dargestellte Übermittlungseinheit übermittelt die von dem Drehrad 32 und dem Schiebeelement 31 erzeugten Steuersignale an eine am Anhänger 1 befestigte Empfangsvorrichtung 13. Die Empfangsvorrichtung 13 bzw. die dort vorhandene Steuereinrichtung berechnet aus den von der Übermittlungseinheit der Fernbedienung 3 übermittelten Steuersignalen ein kumuliertes Antriebssignal pro Rangierantrieb 2. Die Empfangsvorrichtung 13 kann z.B. elektrisch mit den Rangierantrieben 2 verbunden sein und leitet die entsprechenden Antriebssignale an die Rangierantriebe 2 weiter.

Die Fernbedienung 3 kann von einem Bediener auf mindestens zwei Arten bequem in einer Hand gehalten werden: In Normalhaltung, in der die Normalrichtung 81 der Fernbedienung 3 vom Bediener weg zeigt, und in Gegenhaltung, in der die Gegenrichtung 82 der Fernbedienung 3 vom Bediener weg zeigt. Die Gegenhaltung ist dabei vom Bediener vorzugsweise anzuwenden, falls der in Vorwärtsrichtung 71 bewegte Anhänger 1 auf den Bediener zufährt oder der in Rückwärtsrichtung 72 bewegte Anhänger 1 vom Bediener wegfährt. In solchen Situationen muss der Bediener durch das Halten der Fernbedienung 3 in Gegenhaltung weder bei der Bedienung des Schiebeelements 31 noch bei der Bedienung des Drehrads 32 umdenken.

Es können außerdem an dem Gehäuse 33 der Fernbedienung 3, wie in Fig. 2 und Fig. 3 gezeigt, Schalter 341, 342, 351, 352 zur Erzeugung von Steuersignalen zum Steuern der Bewegungseinrichtungen 23 der Rangierantriebe 2 vorgesehen sein. Dabei sind zwei Schalter 341, 342, 351, 352, die jeweils auf gegenüberliegenden Seiten des Anhängers 1 angeordnete Rangierantriebe 2 steuern, auf gleicher Höhe in Bezug auf die Längsachse 91 der Fernbedienung 3 angeordnet, sodass der in Normalrichtung 81 der Fernbedienung 3 gesehen linke von zwei Schaltern 341, 351 den in Vorwärtsrichtung 71 des Anhängers 1 gesehen linken Rangierantrieb 2 steuert, und der in Normalrichtung 81 gesehen rechte der beiden Schalter 342, 352 den in Vorwärtsrichtung 71 des Anhängers 1 gesehen rechten Rangierantrieb 2 steuert. Aus dieser Anordnung der Schalter 341, 342, 351, 352 kann der Bedie-ner auch ohne weitere Kennzeichnung der Schalter 341, 342, 351, 352 erkennen, welcher Schalter 341, 342, 351, 352 welchen Rangierantrieb 2 steuert.

Wird z.B. der Schalter 351 vom Bediener gedrückt, bewegt die in Vorwärtsrichtung 71 des Anhängers 1 gesehen linke Bewegungseinrichtung 23 die entsprechende Antriebsrolle 21 aus einer Ruheposition, in der die Antriebsrolle 21 von dem linken Rad 11 getrennt ist, in eine Antriebsposition, in der die Antriebsrolle 21 gegen linke Rad 11 gedrückt wird. Durch Drücken des Schalters 341 wird die Antriebsrolle 21 vom linken Rad 11 entfernt und in eine Ruheposition bewegt.

Entsprechend bewirkt das Drücken des Schalters 352, dass das am rechten Rad 11 des Anhängers 1 die Antriebsrolle 21 in Antriebsposition bewegt wird, und durch Drücken des Schalters 342 wird die Antriebsrolle 21 wieder vom rechten Rad 11 entfernt.

In einer alternativen Ausführungsform ist ein gleichzeitiges Drücken beider Schalter 351 und 352 erforderlich, um beide Antriebsrollen 21 in Antriebsposition zu bewegen (2-Knopf-Bedienung). In diesem Fall ist es nicht ausreichend, dass nur ein Schalter 351 oder 352 vom Bediener gedrückt wird.

Die von den Schaltern 341, 342, 351, 352 erzeugten Steuersignale zum Steuern der Bewegungseinrichtungen 23 der Rangierantriebe 2 werden von der Übermittlungseinheit der Fernbedienung 3 an die am Anhänger 1 angeordnete Empfangsvorrichtung 13 übermittelt und von der Empfangsvorrichtung 13 an die entsprechenden Rangierantriebe 2 weitergeleitet.

Auf der Fernbedienung 3 ist eine symbolische, verkleinerte Abbildung 36 des Anhängers 1 auf dem Drehrad 32 angebracht, aus der der Bediener erkennt, wie sich ein Verstellen des Schiebeelements 31 oder des Drehrads 32 auf die Bewegung des Anhängers 1 auswirkt. Insbesondere geht aus der Abbildung 36 hervor, dass eine Verstellung des Schiebeelements 31 in Normalrichtung 81 eine Bewegung des Anhängers 1 in Vorwärtsrichtung 71 bewirkt. Zudem erkennt der Bediener aus der Abbildung 36, dass eine Verstellung des Drehrads 32 im Uhrzeigersinn 84 eine Rechtsdrehung des Anhängers 1 bewirkt.

Falls das gesamte Drehrad 32 relativ zum Gehäuse 33 drehbar verstellbar ist, dreht sich die Abbildung 36 mit dem Drehrad 36 mit. Ist nur der Drehring 321 relativ zum Gehäuse 33 drehbar verstellbar, so dreht sich eine auf der Scheibe 321 angebrachte Abbildung 36 nicht mit dem Drehring 321 mit.

An dem Gehäuse 33 der Fernbedienung 3 ist ein Schalter 37 zum Ein- und Ausschalten der Fernbedienung 3 vorgesehen.

## Patentansprüche

1. Rangiersystem für einen Anhänger (1), mit
- wenigstens zwei an dem Anhänger (1) anordenbaren Rangierantrieben (2) mit je einer Antriebsrolle (21), wobei jede Antriebsrolle (21) an je ein Rad (11) des Anhängers (1) anstellbar ist, um dieses anzutreiben; und mit
einer Fernbedienung (3) zum Fernsteuern der Rangierantriebe (2);
wobei die Fernbedienung (3) ein eindimensional verstellbares Stellelement (31) zum Erzeugen eines ersten Steuersignals zum Steuern der Rangierantriebe (2) aufweist, wobei durch die Rangierantriebe (2) entsprechend dem von dem Stellelement (31) erzeugten ersten Steuersignal eine Vorwärts- bzw. Rückwärtsbewegung des Anhängers (1) bewirkbar ist;
und die Fernbedienung (3) ein drehbar verstellbares Drehelement (32) zum Erzeugen eines zweiten Steuersignals zum Steuern der Rangierantriebe (2) aufweist; wobei durch die Rangierantriebe (2) entsprechend dem von dem Drehelement (32) erzeugten zweiten Steuersignal eine Drehung des Anhängers (1) um eine Hochachse (99) des Anhängers (1) bewirkbar ist;
**dadurch gekennzeichnet, dass** das Stellelement (31) und das Drehelement (32) auf der gleichen Seite eines Gehäuses (33) der Fernbedienung (3) räumlich getrennt voneinander angeordnet sind,.

2. Rangiersystem nach einem der vorangehenden Ansprüche, **dadurch gekennzeichnet, dass**
- das Gehäuse (33) der Fernbedienung (3) eine maximale räumliche Ausdehnung in Richtung einer Längsachse (91) aufweist,
- das Stellelement (31) in Richtung dieser Längsachse (91) verstellbar ist und dass
- eine Drehachse (92) des Drehelements (32) senkrecht auf der Längsachse (91) steht.

3. Rangiersystem nach einem der vorangehenden Ansprüche, **dadurch gekennzeichnet, dass**
- das Stellelement (31) und das Drehelement (32) auf einer flachen Oberfläche des Gehäuses (33) der Fernbedienung (3) angeordnet sind,
- das Stellelement (31) in einer Richtung der flachen Oberfläche verstellbar ist und dass
- eine Drehebene des Drehelements (32) parallel zu der flachen Oberfläche verläuft.

4. Rangiersystem nach einem der vorangehenden Ansprüche, **dadurch gekennzeichnet, dass** das Stellelement (31) aus einer Ausgangsstellung heraus in zwei entgegengesetzte Richtungen (81, 82) verstellbar ist, wobei durch entsprechende Verstellung des Stellelements (31) in eine Richtung (81) eine Vorwärtsbewegung und durch eine Verstellung des Stellelements (31) in die andere Richtung (82) eine Rückwärtsbewegung des Anhängers steuerbar ist.

5. Rangiersystem nach einem der vorangehenden Ansprüche, **dadurch gekennzeichnet, dass** das Stellelement (31) ein Schiebeelement mit einem Schieber ist, wobei der Schieber relativ zum Gehäuse (33) der Fernbedienung (3) verschiebbar ist.

6. Rangiersystem nach einem der vorangehenden Ansprüche, **dadurch gekennzeichnet, dass** das Drehelement (32) ein Drehrad ist, das relativ zum Gehäuse (33) der Fernbedienung (3) drehbar ist.

7. Rangiersystem nach einem der vorangehenden Ansprüche, **dadurch gekennzeichnet, dass** die Fernbedienung (3) eine Übermittlungseinheit aufweist, welche ausgebildet ist, um die von dem Stellelement (31) und dem Drehelement (32) erzeugten Steuersignale über eine Funkverbindung, eine optische Verbindung oder eine Kabelverbindung an eine am Anhänger (1) anordenbare Empfangsvorrichtung (13) zu übertragen.

8. Rangiersystem nach einem der vorangehenden Ansprüche, **dadurch gekennzeichnet, dass** eine auf dem Gehäuse (33) der Fernbedienung (3), dem Stellelement (31) oder dem Drehelement (32) sichtbar angebrachte Markierung oder Abbildung (36) vorgesehen ist, die diejenige Richtung (81, 82) kennzeichnet, in der das Stellelement (31) verstellt werden muss, um eine Vorwärts- oder Rückwärtsbewegung des Anhängers (1) zu steuern.

9. Rangiersystem nach einem der vorangehenden Ansprüche, **dadurch gekennzeichnet, dass** eine auf dem Gehäuse (33) der Fernbedienung (3), dem Stellelement (31) oder dem Drehelement (32) sichtbar angebrachte Markierung oder Abbildung (36) vorgesehen ist, die diejenige Richtung kennzeichnet, in der das Drehelement (32) gedreht werden muss, um eine Links- oder Rechtsdrehung des Anhängers (1) zu steuern.

10. Rangiersystem nach einem der vorangehenden Ansprüche, **dadurch gekennzeichnet, dass** das Stellelement (31) aus einer Ausgangsstellung heraus in mindestens eine Richtung (81, 82) verstellbar ist, wobei das Stellelement (31) einen Rückstellmechanismus zum Zurückstellen des Stellelements (31) nach einer Auslenkung wieder in die Ausgangsstellung aufweist.

11. Rangiersystem nach einem der vorangehenden Ansprüche, **dadurch gekennzeichnet, dass** das Drehelement (32) aus einer Ausgangsstellung heraus in mindestens eine Richtung (83, 84) verstellbar ist, wobei das Drehelement (32) einen Rückstellmechanismus zum Zurückstellen des Drehelements (32) nach einer Auslenkung wieder in die Ausgangsstellung aufweist.

12. Rangiersystem nach einem der vorangehenden Ansprüche, **dadurch gekennzeichnet, dass** die Fernbedienung (3) eine Totmanneinrichtung zum Detektieren einer Hand an dem Gehäuse (33) der Fernbedienung (3) und zum Blockieren des ersten Steuersignals und/oder des zweiten Steuersignals, falls keine Hand an dem Gehäuse (33) der Fernbedienung (3) detektiert wird, aufweist.

13. Rangiersystem nach einem der vorangehenden Ansprüche, **dadurch gekennzeichnet, dass** die Fernbedienung (3) Betätigungselemente (341, 342, 351, 352) aufweist, wobei nur bei dem Betätigen von wenigstens zwei der Betätigungselemente (351, 352) ein Signal zum Anstellen der Antriebsrollen (21) an die jeweiligen Räder (11) in Antriebsposition erzeugbar ist.

## Claims

1. A maneuvering system for a trailer (1), comprising
- at least two maneuvering drives (2) which are adapted to be arranged at the trailer (1) and each have a drive roller (21), each drive roller (21) being adapted to be applied against a respective wheel (11) of the trailer (1) in order to drive this wheel; and comprising
a remote control (3) for remote control of the maneuvering drives (2);
the remote control (3) including a one-dimensionally adjustable actuating element (31) for generating a first control signal for controlling the maneuvering drives (2), the maneuvering drives (2) being adapted to effect a forward or backward movement of the trailer (1) in accordance with the first control signal generated by the actuating element (31);
and the remote control (3) including a rotatably adjustable rotary element (32) for generating a second control signal for controlling the maneuvering drives (2), the maneuvering drives (2) being adapted to effect a rotation of the trailer (1) about a vertical axis (99) of the trailer (1) in accordance with the second control signal generated by the rotary element (32);
**characterized in that**
the actuating element (31) and the rotary element (32) are arranged spatially separate from each other on the same side of a housing (33) of the remote control (3).

2. The maneuvering system according to any of the preceding claims, **characterized in that**
- the housing (33) of the remote control (3) has a maximum spatial extent in the direction of a longitudinal axis (91),
- the actuating element (31) is adjustable in the direction of this longitudinal axis (91), and **in that**
- a rotational axis (92) of the rotary element (32) is perpendicular to the longitudinal axis (91).

3. The maneuvering system according to any of the preceding claims, **characterized in that**
- the actuating element (31) and the rotary element (32) are arranged on a flat surface of the housing (33) of the remote control (3),
- the actuating element (31) is adjustable in a direction of the flat surface, and **in that**
- a plane of rotation of the rotary element (32) extends parallel to the flat surface.

4. The maneuvering system according to any of the preceding claims, **characterized in that** the actuating element (31) is adjustable in two opposite directions (81, 82) starting from an initial position, a forward movement being controllable by an appropriate adjustment of the actuating element (31) in one direction (81) and a backward movement of the trailer being controllable by an adjustment of the actuating element (31) in the other direction (82).

5. The maneuvering system according to any of the preceding claims, **characterized in that** the actuating element (31) is a sliding element with a slider, the slider being displaceable relative to the housing (33) of the remote control (3).

6. The maneuvering system according to any of the preceding claims, **characterized in that** the rotary element (32) is a rotary wheel that is rotatable relative to the housing (33) of the remote control (3).

7. The maneuvering system according to any of the preceding claims, **characterized in that** the remote control (3) includes a transmission unit which is configured to transmit the control signals generated by the actuating element (31) and the rotary element (32) via a wireless connection, an optical connection or a cable connection to a receiving device (13) which is adapted to be arranged at the trailer (1).

8. The maneuvering system according to any of the preceding claims, **characterized in that** a marking or image (36) is provided which is visibly fixed on the housing (33) of the remote control (3), the actuating element (31) or the rotary element (32) and which marks the direction (81, 82) in which the actuating element (31) has to be adjusted in order to control a forward or backward movement of the trailer (1).

9. The maneuvering system according to any of the preceding claims, **characterized in that** a marking or image (36) is provided which is visibly fixed on the housing (33) of the remote control (3), the actuating element (31) or the rotary element (32) and which marks the direction in which the rotary element (32) has to be rotated in order to control a left-hand or right-hand rotation of the trailer (1).

10. The maneuvering system according to any of the preceding claims, **characterized in that** starting from an initial position, the actuating element (31) is adjustable in at least one direction (81, 82), the actuating element (31) including a restoring mechanism for returning the actuating element (31) back to the initial position after a deflection.

11. The maneuvering system according to any of the preceding claims, **characterized in that** starting from an initial position, the rotary element (32) is adjustable in at least one direction (83, 84), the rotary element (32) including a restoring mechanism for returning the rotary element (32) back to the initial position after a deflection.

12. The maneuvering system according to any of the preceding claims, **characterized in that** the remote control (3) includes an automatic vigilance device for detecting a hand on the housing (33) of the remote control (3) and for blocking the first control signal and/or the second control signal if no hand is detected on the housing (33) of the remote control (3).

13. The maneuvering system according to any of the preceding claims, **characterized in that** the remote control (3) includes operating elements (341, 342, 351, 352), wherein a signal for applying the drive rollers (21) against the respective wheels (11) to the drive position can be generated only upon operation of at least two of the operating elements (351, 352).

## Revendications

1. Système de manoeuvre pour remorque (1), comportant
- au moins deux entraînements de manoeuvre (2) qui sont aptes à être agencés sur la remorque (1) et qui présentent chacun un rouleau d'entraînement (21), chaque rouleau d'entraînement (21) étant apte à être appliqué sur une roue (11) respective de la remorque (1) pour entraîner la roue ; et comportant
une télécommande (3) pour la commande à distance des entraînements de manoeuvre (2) ;
la télécommande (3) présentant un élément de réglage (31) apte à être déplacé de manière unidimensionnelle pour générer un premier signal de commande pour la commande des entraînements de manoeuvre (2), un mouvement de la remorque (1) en avant ou en arrière pouvant être induit par les entraînements de manoeuvre (2) conformément au premier signal de commande généré par l'élément de réglage (31) ;
et la télécommande (3) présentant un élément de rotation (32) apte à être déplacé en rotation pour générer un deuxième signal de commande pour la commande des entraînements de manoeuvre (2), une rotation de la remorque (1) autour d'un axe vertical (99) de la remorque (1) pouvant être induite par les entraînements de manoeuvre (2) conformément au deuxième signal de commande généré par l'élément de rotation (32) ;
**caractérisé en ce que**
l'élément de réglage (31) et l'élément de rotation (32) sont agencés séparés l'un de l'autre dans l'espace du même coté d'un boîtier (33) de la télécommande (3).

2. Système de manoeuvre selon l'une des revendications précédentes, **caractérisé en ce que**
- le boîtier (33) de la télécommande (3) présente une dimension dans l'espace maximale dans le sens d'un axe longitudinal (91),
- l'élément de réglage (31) est apte à être déplacé dans le sens de cet axe longitudinal (91), et **en ce que**
- un axe de rotation (92) de l'élément de rotation (32) est perpendiculaire à l'axe longitudinal (91).

3. Système de manoeuvre selon l'une des revendications précédentes, **caractérisé en ce que**
- l'élément de réglage (31) et l'élément de rotation (32) sont agencés sur une surface plane du boîtier (33) de la télécommande (3),
- l'élément de réglage (31) est apte à être déplacé dans un sens de la surface plane, et **en ce que**
- un plan de rotation de l'élément de rotation (32) est parallèle à la surface plane.

4. Système de manoeuvre selon l'une des revendications précédentes, **caractérisé en ce que** l'élément de réglage (31) est apte à être déplacé à partir d'une position initiale dans deux sens opposés (81, 82), un mouvement en avant étant apte à être commandé par un déplacement approprié de l'élément de réglage (31) dans un sens (81), et un mouvement de la remorque en arrière étant apte à être commandé par un déplacement de l'élément de réglage (31) dans l'autre sens (82).

5. Système de manoeuvre selon l'une des revendications précédentes, **caractérisé en ce que** l'élément de réglage (31) est un élément coulissant présentant un coulisseau, le coulisseau étant coulissant par rapport au boîtier (33) de la télécommande (3).

6. Système de manoeuvre selon l'une des revendications précédentes, **caractérisé en ce que** l'élément de rotation (32) est une molette qui est mobile en rotation par rapport au boîtier (33) de la télécommande (3).

7. Système de manoeuvre selon l'une des revendications précédentes, **caractérisé en ce que** la télécommande (3) présente une unité de transmission qui est réalisée de manière à transmettre les signaux de commande générés par l'élément de réglage (31) et l'élément de rotation (32) à un dispositif de réception (13) apte à être agencé sur la remorque (1) via une liaison radio, une liaison optique ou une liaison par câbles.

8. Système de manoeuvre selon l'une des revendications précédentes, **caractérisé en ce qu'**il est prévu une marque ou une image (36) ménagée de manière visible sur le boîtier (33) de la télécommande (3), l'élément de réglage (31) ou l'élément de rotation (32), laquelle marque le sens (81, 82) dans lequel l'élément de réglage (31) doit être déplacé pour commander un mouvement de la remorque (1) en avant ou en arrière.

9. Système de manoeuvre selon l'une des revendications précédentes, **caractérisé en ce qu'**il est prévu une marque ou une image (36) ménagée de manière visible sur le boîtier (33) de la télécommande (3), l'élément de réglage (31) ou l'élément de rotation (32), laquelle marque le sens dans lequel l'élément de rotation (32) doit être tourné pour commander une rotation de la remorque (1) vers la gauche ou vers la droite.

10. Système de manoeuvre selon l'une des revendications précédentes, **caractérisé en ce que** l'élément de réglage (31) est apte à être déplacé à partir d'une position initiale dans au moins un sens (81, 82), l'élément de réglage (31) présentant un mécanisme de rappel pour rappeler l'élément de réglage (31) dans la position initiale après une déviation.

11. Système de manoeuvre selon l'une des revendications précédentes, **caractérisé en ce que** l'élément de rotation (32) est apte à être déplacé à partir d'une position initiale dans au moins un sens (83, 84), l'élément de rotation (32) présentant un mécanisme de rappel pour rappeler l'élément de rotation (32) dans la position initiale après une déviation.

12. Système de manoeuvre selon l'une des revendications précédentes, **caractérisé en ce que** la télécommande (3) présente un dispositif de veille automatique pour la détection d'une main sur le boîtier (33) de la télécommande (3) et pour le blocage du premier signal de commande et/ou du deuxième signal de commande au cas où aucune main n'est détectée sur le boîtier (33) de la télécommande (3).

13. Système de manoeuvre selon l'une des revendications précédentes, caractérisé en ce la télécommande (3) présente des éléments d'actionnement (341, 342, 351, 352), un signal pour appliquer les rouleaux d'entraînement (21) sur les roues (11) respectives dans la position d'entraînement pouvant uniquement être généré lors de l'actionnement d'au moins deux des éléments d'actionnement (351, 352).
